# EUROPÄISCHE PATENTSCHRIFT

(11) **EP 1 118 129 B1**
(45) Veröffentlichungstag und Bekanntmachung des Hinweises auf die Patenterteilung: **26.11.2008**
(21) Anmeldenummer: 99953556.0
(22) Anmeldetag: 20.08.1999
(51) Int. Cl.: H01M 4/00

(54) **GASDIFFUSIONSELEKTRODE UND VERFAHREN ZU DEREN HERSTELLUNG**
GAS DIFFUSION ELECTRODE AND METHOD FOR PRODUCING SAID ELECTRODE
ELECTRODE A DIFFUSION GAZEUSE ET PROCEDE DE SA PRODUCTION

(30) Priorität: 26.08.1998 DE 19838786
(43) Veröffentlichungstag der Anmeldung: 25.07.2001
(73) Patentinhaber: SIEMENS AKTIENGESELLSCHAFT, 80333 München (DE)
(72) Erfinder: DATZ, Armin, D-91099 Poxdorf (DE); SCHRICKER, Barbara, D-91054 Buckenhof (DE); WAIDHAS, Manfred, D-90427 Nürnberg (DE)
(86) Internationale Anmeldenummer: PCT/DE1999/002622
(87) Internationale Veröffentlichungsnummer: WO 2000/013243

(56) Entgegenhaltungen:
- EP-A- 0 028 922
- EP-A- 0 357 077
- EP-A- 0 641 033
- US-A- 3 912 538
- US-A- 4 229 490
- US-A- 4 568 442
- US-A- 4 615 954

## Beschreibung

Die Erfindung betrifft eine Gasdiffusionselektrode zur Verwendung in PEM-Brennstoffzellen sowie ein Verfahren zu deren Herstellung, wie sie in den Oberbegriffen der unabhängigen Ansprüchen angegeben sind. Mit dem Herstellungsverfahren soll insbesondere eine Hydrophobierung der Gasdiffusionselektrode möglich sein.

Eine PEM-Brennstoffzelle hat als Kernstück eine Membran-Elektroden-Einheit, die aus einer Membran mit beidseitig einer Elektrode, die eine Elektrokatalysatorschicht umfaßt, aufgebaut ist. Die Elektrode hat normalerweise einen festen, gasdurchlässigen und elektrisch leitfähigen Träger (z. B. Kohlegewebe oder -papier), der bevorzugt mit einer PolymerSuspension (das Polymer wird im folgenden Polymer A genannt, es handelt sich dabei um Polymere wie z.B. PTFE d.h. Polytetrafluorethylen, Teflon) hydrophobiert ist. Auf diesen Träger ist eine Elektrokatalysatorschicht aufgebracht, die ihrerseits wieder hydrophobiert wird. Das Polymer A kann deshalb sowohl in dem Träger als auch in der Elektrokatalysatorschicht enthalten sein. Die Elektrode kann daneben ein weiteres Polymer als Binder enthalten, das im vorliegenden Zusammenhang als Polymer B bezeichnet wird.

Der notwendige Gehalt an Polymer A zur Hydrophobierung der Elektrokatalysatorschicht beträgt bisher in der Regel 20-60 Gew.-%, wobei ein hoher Gehalt an Polymer A, wie z.B. Teflon, die Aktivität des Platinkatalysators hemmt, die Kontaktwiderstände erhöht und die Porosität der Elektrode verringert (Watanabe, J. Elektroanal. Chem. 195 (1985) 81-83), d.h. sich nachteilig auf das System auswirkt. Das Polymer A zur Hydrophobierung der Elektrokatalysatorschicht kann deshalb auch als "Katalysatorhemmer" bezeichnet werden.

Bei den bislang bekannten Elektroden ist außer einem hohen Gehalt an Polymer A zur Hydrophobierung der Elektrokatalysatorschicht (20 - 60 Gew.-%, immer bezogen auf den Gehalt an metallischem Katalysator) auch die Homogenität der Dicke der Elektrokatalysatorschicht ein Problem. Es besteht ein Bedarf, ein geeignetes Herstellungsverfahren, das kostengünstig und massenfertigungstauglich eine gleichmäßige Beschichtung des Trägers mit trockenem Katalysatorpulver in geringen Schichtstärken von 3-40µm ermöglicht, zu schaffen.

Nach der konventionellen Methode (Watanabe, J. Electroanal. Chem. 195 (1985) 81-83; J. Elektroanal.Chem. 197 (1986) 195-208 M. Uchida, J. Elektrochem. Soc., 142 (1995) 463-468) wird eine trockene pulverisierte Mischung aus vorher mit PTFE hydrophobiertem Katalysatorpulver auf den ebenfalls hydrophobierten Träger gepreßt. Zur Herstellung der Mischung wird zunächst das Kohlepulver intensiv mit PTFE-Dispersion gemischt und dann oberhalb einer Temperatur von 280°C getrocknet. Dabei wird das in der Dispersion enthaltene oberflächenaktive Netzmittel (Triton X 100) entfernt. Das Netzmittel wird eingesetzt, um die schlechten Verarbeitungseigenschaften, die durch den hohen Gehalt an Polymer A in der Siebdruckpaste entstehen, auszugleichen. Anschließend wird das Gemisch pulverisiert. Dieses Verfahren ist sehr aufwendig und eine gleichmäßige Dicke der Elektrokatalysatorschicht in geringen Schichtstärken läßt sich technisch nur schwer und in geringen Stückzahlen herstellen. Nachteilig ist zudem bei diesem Verfahren, daß
- ein hoher Gehalt an Polymer A zur Hydrophobierung der Elektrokatalysatorschicht enthalten ist, und
- zur Verarbeitung ein Netzmittel zugesetzt wird, das extra entfernt werden muß und störende Rückstände hinterläßt.

Vom Stand der Technik sind Gasdiffusionselektroden zur Verwendung in elektrochemischen Zellen beispielsweise aus der US 4 568 442 A und US 4 615 954 A bekannt. Dabei soll die Oberfläche einer solchen Gasdiffusionselektrode hydrophob sein, wozu speziell in einem Beispiel der US 4 615 954 A ein Polymeranteil von 30 % als geeignet angesehen wird.

Die Herstellung solcher Gasdiffusionselektroden erfolgt gemäß der US 4 229 490 A und der EP 0 357 077 A1 nach der Siebdrucktechnik. Das Siebdrucken ist eine bekannte Technik zur Herstellung einer gleichmäßig dünnen Schicht. Der Einsatz von Siebdruck für den Aufbau eines elektrochemischen Systems ist bereits bekannt. Gemäß der US 4 229 290 A muß dafür der Siebdruckpaste, die Teflondispersion, Graphit und Platinschwarz enthält, zur Stabilisierung wieder über 50 Gew.-% des Netz-oder Dispergiermittels "Triton X 100" zugesetzt werden. Der zur Hydrophobierung eingesetzte Teflonanteil in der Siebdruckpaste und damit der in der resultierenden Elektrokatalysatorschicht vorhandene beträgt ca. 25 Gew.-%. Die Paste wird auf einen festen Träger, z.B. Kohlepapier gedruckt, das nochmals 60 Gew.-% Teflon enthält. Es ergibt sich ein Gesamtgehalt an Teflon von ca. 85%. Nachteilig an der mit diesem Verfahren hergestellten Elektrode ist außer diesem extrem hohen Gehalt an Polymer A zur Hydrophobierung der Elektrokatalysatorschicht (hier: Teflon) auch das in über 50 Gew.-% (der Katalysatorpaste) zugesetzte Netzmittel.

Ausgehend vom Stand der Technik ist es Aufgabe der Erfindung, eine verbesserte Gasdiffusionselektrode zu schaffen sowie ein Verfahren zu ihrer Herstellung anzugeben. Das Herstellungsverfahren soll kostengünstig und massenfertigungstauglich sein und die Hydrophobierung der Gasdiffusionselektrode mit einem geringen Polymeranteil erreichen.

Diese Aufgabe wird durch den Gegenstand der unabhängigen Ansprüche gelöst. Weitere Ausgestaltungen der Erfindung ergeben sich aus den übrigen Ansprüchen und aus der Beschreibung.

Gegenstand der Erfindung ist eine Gasdiffusionselektrode für eine PEM-Brennstoffzelle mit einer Elektrokatalysatorschicht, die einen Gehalt an Polymer A zur Hydrophobierung von kleiner 10 Gew.-% und eine gleichmäßige Dicke der Elektrokatalysatorschicht von kleiner/gleich 20 µm hat. Außerdem ist Gegenstand der Erfindung eine Gasdiffusionselektrode, die durch ein Siebdruckverfahren mit einer Siebdruckpaste, die einen Gehalt an Polymer A zur Hydrophobierung der Elektrokatalysatorschicht von maximal 10 Gew.-% (bezogen auf den Gehalt an metallischem Katalysator), zumindest einen metallischen Katalysator und ein hochsiedendes Lösungsmittel umfaßt, hergestellt ist. Schließlich ist noch Gegenstand der Erfindung ein Verfahren zur Herstellung einer Gasdiffusionselektrode, bei dem im Siebdruckverfahren auf eine Elektrode und/oder eine Membran eine Katalysatorpaste, die zumindest einen metallischen Katalysator und ein Siebdruckmedium umfaßt, aufgedruckt wird und in einem folgenden, zweiten Arbeitsschritt das Siebdruckmedium durch Erhitzen entfernt wird. Eine Verwendung einer Gasdiffusionselektrode nach der Erfindung in einer Brennstoffzelle ist auch noch Gegenstand der Erfindung.

Nach einer vorteilhaften Ausführungsform der Erfindung enthält die Elektrokatalysatorschicht und/oder die Siebdruckpaste (bezogen auf deren Gehalt an metallischem Katalysator) nur noch 0,01 bis 1 Gew%, bevorzugt 0,05 bis 0,5 Gew% und besonders bevorzugt 0,075 bis 0,2 Gew% und insbesondere 0,1 Gew% an Polymer A zur Hydrophobierung der Elektrokatalysatorschicht.

Nach einer vorteilhaften Ausgestaltung der Erfindung ist das Polymer A zur Hydrophobierung der Elektrokatalysatorschicht Teflon, insbesondere eine amorphe Modifikation von Teflon, die in Lösung gebracht werden kann.

Bevorzugt wird als metallischer Katalysator Platinschwarz oder Platin auf Kohlenstoff genommen.

Bevorzugt wird als hochsiedendes Lösungsmittel der Siebdruck-und/oder Katalysatorpaste ein Ester und/oder ein Keton und/oder ein Alkohol, besonders bevorzugt Glycolsäurebutylester, Cyclohexanon und/oder Terpineol, eingesetzt.

Nach einer Ausgestaltung der Erfindung wird der Katalysatorpaste außer dem metallischen Katalysator und dem hochsiedenden Lösungsmittel noch ein Polymer B, bevorzugt ein Polymer, das bis zu 400 °C ausheizbar ist, als Binder zugesetzt.

Bei einer Ausführungsform der Gasdiffusionselektrode, geht in der Elektrokatalysatorschicht der Gehalt an Polymer A zur Hydrophobierung der Elektrokatalysatorschicht gegen Null, wobei Null ausgeschlossen ist.

In einer weiteren Abwandlung des Verfahrens wird auf den Träger zum Auffüllen der großen Poren und damit zur Reduzierung der zur vollständigen Beschichtung notwendigen Katalysatormenge zunächst eine Kohlepaste bestehend aus elektrisch leitfähigem Ruß und Siebdruckmedium aufgedruckt. Dadurch entsteht eine allererste Siebdruckbeschichtung des Trägers mit Kohle. Erst nach der Trocknung dieser ersten Siebdruckbeschichtung wird der Siebdruck mit der - wesentlich teureren - Katalysatorpaste durchgeführt.

Nach einer weiteren Ausgestaltung des Verfahrens kann zur Erzielung eines unterschiedlichen Gehaltes an Polymer A in der Gasdiffusionselektrode sowohl die Kohlepaste des ersten Siebdruckvorganges als auch der Träger oder beide zusätzlich Polymer A enthalten.

Der Gesamtgehalt an Polymer A in der Gasdiffusionselektrode ist begrifflich von dem kritischen Gehalt an "Polymer A zur Hydrophobierung der Elektrokatalysatorschicht" getrennt, weil unter der angeführten Bezeichnung nur die Menge an Polymer A verstanden wird, die durch das Eintauchbad und/oder über die Siebdruckpaste auf die Elektrokatalysatorschicht aufgebracht wird. Der Gesamtgehalt an Polymer A in der Gasdiffusionselektrode (d.h. Gehalt an Polymer A im Träger, in der ersten Siebdruckschicht und in der Elektrokatalysatorschicht zusammen) summiert sich vorteilhafterweise auf bis zu 20 Gew%, bevorzugt auf kleiner 15 Gew% und besonders bevorzugt auf kleiner 10 Gew%, ganz besonders bevorzugt auf kleiner 5 Gew% und insbesondere auf kleiner 3,5 Gew%.

Bevorzugt wird als Polymer A Teflon eingesetzt, insbesondere eine Modifikation, die amorph und/oder transparent vorliegt und sich in fluorierten Lösungsmitteln komplett lösen läßt. Alternativ kann aber auch ein anderes Polymer, wie z.B. Ethylen-Propylen-Copolymer oder ein anderes fluorhaltiges Polymer, z.B. PVDF (Polyvinylidenfluorid) eingesetzt werden.

Als Elektrokatalysatorschicht wird hier die Schicht bezeichnet, die bevorzugt auf einem festen, gasdurchlässigen und elektrisch leitfähigen Träger der Elektrode aufgebracht ist und an deren katalytischer Oberfläche die anodische Oxidation des Brennstoffs zu Protonen oder die kathodische Reduktion des Sauerstoffs stattfindet. Die Elektrokatalysatorschicht umfaßt zumindest den metallischen Katalysator, der bevorzugt platinhaltig ist, der in reiner Form als Platinschwarz oder in verdünnter Form als Platin auf Kohle in der Katalysatorpaste eingesetzt werden kann. Bevorzugt enthält die Elektrokatalysatorschicht keine weiteren Bestandteile, weil nach der bevorzugten Ausführungsform der Erfindung das Siebdruckmedium, das der Katalysatorpaste zur Verarbeitung zugesetzt wird, durch Trocknen und Erhitzen der fertigen, d.h. beschichteten Elektrode entfernt wurde.

Als "gleichmäßige Elektrokatalysatorschichtdicke" wird eine Schicht von 3 - 20 µm Dicke bezeichnet, die mit herkömmlichem Siebdruckverfahren aufgebracht wurde und deren Dickeschwankungen in der Regel unter denen liegen, die mit einer anderen Beschichtungstechnik für Brennstoffzellenelektroden erreichbar sind.

Zur Verarbeitung wird der Siebdruckpaste (auch Kohle- oder Katalysatorpaste, je nach Arbeitsschritt, genannt) zumindest noch ein hochsiedendes Lösungsmittel als Siebdruckmedium, wie z.B. ein Ester, Keton und/oder ein Alkohol, insbesondere Glycolsäurebutylester, Cyclohexanon und/oder Terpineol, zugesetzt. Vorteilhafterweise wird als Siebdruckmedium nicht allein ein hochsiedendes Lösungsmittel, sondern auch noch als Binder ein Polymer B, wie z.B. Polyvinylalkohol und/oder Polyethylenoxid zugesetzt. Das Polymer B ist bevorzugt ausheizbar, insbesondere bei Temperaturen bis zu 400 °C, oder hinterläßt nur Rückstände, die den Brennstoffzellenbetrieb nicht stören.

Die Elektrode ist eine gaspermeable, elektrisch leitfähige Schicht auf der Membran, die bevorzugt einen Träger mit einer Elektrokatalysatorschicht umfaßt. Als Träger oder Substrat wird bevorzugt ein Kohlegewebe oder ein Kohlepapier oder ein anderes poröses und elektrisch leitfähiges Substrat verwendet.

Im folgenden wird das Verfahren nach der Erfindung noch anhand einer bevorzugten Ausführungsform näher erläutert.

Zur Herstellung der Siebdruckpasten wird das Kohle- oder Katalysatorpulver unter Rühren in ein Siebdruckmedium, bestehend aus z.B. in Terpineol gelöstem Polyethylenoxid gegeben. Der Gehalt an Binder beträgt 0 bis 20 Gew%, vorzugsweise 5 bis 15 Gew%. Als Katalysator wird Platinschwarz oder Platin auf Kohle verwendet. Der Siebdruck wird mit einer handelsüblichen Siebdruckmaschine durchgeführt. Es werden Edelstahlsiebe bis zur Größe 760 * 700 mm² mit einer Maschenweite von 100 bis 300 Maschen pro inch (ca. 39 bis 118 Maschen pro cm) verwendet. Damit können Naßschichtdicken von 6 bis 60µm pro Druckvorgang erreicht werden. Pro Druckvorgang werden praktisch beliebige Flächen, begrenzt durch die Größe der bedruckbaren Fläche der Siebdruckmaschine, beschichtet. Die Elektroden werden anschließend an den Druckvorgang bei 120 °C getrocknet und zur Entfernung des Binders auf 360 °C aufgeheizt.

Die durch Auswiegen bestimmte Platinbelegung beträgt bei reinem Platinschwarz als Katalysator 2-3mg/cm² und bei Platin auf Kohle als Katalysator je nach Platinbelegung der Kohle 0,15 bis 0,4 mg/cm².

Es wurden Strom-Spannungs-Kurven von Membran-Elektroden-Einheiten mit erfindungsgemäßen Gasdiffusionselektroden durchgeführt, bei denen ein außergewöhnlich geringer Spannungsabfall bei hohen Stromstärken beobachtet werden konnte. Dies ist u.a. auf die geringe Diffusionshemmung, bedingt durch den geringen Gehalt an Polymer A und Schädigung der Hydrophobierung durch Netzmittelrückstand, innerhalb der porösen Elektrokatalysatorschicht zurückzuführen.

Das vorliegende Verfahren mittels Siebdruck ermöglicht es, die Kosten für die Elektrodenherstellung deutlich zu senken. Mit dem Siebdruckverfahren wird eine gleichmäßige Schichtdikke über die gesamte Elektrode auch bei großen Elektroden (z.B. 36 * 36 cm²) und eine gute Reproduzierbarkeit bei einer Massenfertigung erreicht. Da die Hydrophobierung, wenn überhaupt, erst am Schluß des Verfahrens durch Tränken der kompletten Elektrode in eine Lösung des Polymers A erfolgt, werden die Verarbeitungseigenschaften (und das Ausbrennverhalten) der Siebdruckpasten nicht durch die Polymersuspension und zusätzliche Netz- und Dispersionsmittel beeinträchtigt, welche zur Koagulation und/oder Schaumbildung neigen.

Nach der Erfindung sind zur Hydrophobierung der Elektrode deutlich geringere Mengen an Polymer A in der Elektrokatalysatorschicht notwendig, da sich das Polymer A aus der Lösung nur als dünner Film auf der Oberfläche der Elektrodenpartikel (Kohle, Platin etc.) abscheidet. Vorteilhafterweise enthält die Elektrokatalysatorschicht nur noch 0,01 bis 0,5 Gew%, bevorzugt 0,05 bis 0,3 Gew% und besonders bevorzugt 0,075 bis 0,2 Gew% und insbesondere 0,1 Gew% an Polymer A zur Hydrophobierung der Elektrokatalysatorschicht anstatt wie bisher 20 - 60 Gew%. Dadurch wird ein Verstopfen der Gasporen durch Polymer-A-Agglomerate in der Elektrokatalysatorschicht und/oder im Träger weitgehendst verhindert.

## Patentansprüche

1. Gasdiffusionselektrode für eine PEM-Brennstoffzelle mit einer Elektrokatalysatorschicht, die einen Gehalt an Polymer A zur Hydrophobierung der Elektrokatalysatorschicht von kleiner 10 Gew.-% bezogen auf den Gehalt an metallischem Katalysator und eine gleichmäßige Dicke der Elektrokatalysatorschicht von kleiner/gleich 20 µm hat.

2. Gasdiffusionselektrode nach Anspruch 1, **dadurch gekennzeichnet, dass** der Gehalt an Polymer A zur Hydrophobierung der Elektrokatalysatorschicht zwischen 0,01 und 1 Gew.-% liegt.

3. Gasdiffusionselektrode nach Anspruch 2, **dadurch gekennzeichnet, dass** der Gehalt an Polymer A in der Elektrokatalysatorschicht bei 0,01 Gew.-% liegt.

4. Verfahren zur Herstellung einer Gasdiffusionselektrode nach Anspruch 1 oder einem der Ansprüche 2 oder 3, unter Ausführung eines Siebdruckverfahrens mit folgenden Arbeitsschritten:
- in einem ersten Arbeitsschritt des Siebdruckverfahrens wird auf einen Träger eine Siebdruckpaste, die zumindest einen metallischen Katalysator mit einem Gehalt an Polymer A bis maximal 10 % und ein Siebdruckmedium umfasst, aufgedruckt und
- in einem zweiten Arbeitsschritt wird das Siebdruckmedium durch Erhitzen entfernt.

5. Verfahren nach Anspruch 4, **dadurch gekennzeichnet, dass** als Siebdruckmedium ein hochsiedendes Lösungsmittel eingesetzt wird.

6. Verfahren nach Anspruch 4 oder Anspruch 5, **dadurch gekennzeichnet, dass** im zweiten Arbeitsschritt das Siebdruckmedium auf maximal 400°C erhitzt wird.

7. Verfahren nach einem der Ansprüche 4 bis 6, **dadurch gekennzeichnet, dass** als Träger ein Substrat verwendet wird, das bereits Polymer A enthält.

8. Verwendung einer Gasdiffusionselektrode nach einem der Ansprüche 1 bis 3, hergestellt nach einem der Ansprüche 4 bis 7, in einer Brennstoffzelle.

## Claims

1. Gas diffusion electrode for a PEM fuel cell, having an electrocatalyst layer which has a content of polymer A for hydrophobicizing the electrocatalyst layer of less than 10% by weight, based on the content of metallic catalyst, and a uniform thickness of the electrocatalyst layer of less than or equal to 20 µm.

2. Gas diffusion electrode according to Claim 1, **characterized in that** the content of polymer A for hydrophobicizing the electrocatalyst layer is between 0.01 and 1% by weight.

3. Gas diffusion electrode according to Claim 2, **characterized in that** the content of polymer A in the electrode catalyst layer is 0.01% by weight.

4. Method of producing a gas diffusion electrode according to Claim 1 or one of Claims 2 or 3, carrying out a screen-printing process with the following operations:
- in a first operation of the screen-printing process, a screen-printing paste, which comprises at least one metallic catalyst with a content of polymer A up to at most 10% and a screen-printing medium, is printed onto a carrier, and
- in a second operation, the screen-printing medium is removed by heating.

5. Method according to Claim 4, **characterized in that** the screen-printing medium used is a high-boiling solvent.

6. Method according to Claim 4 or Claim 5, **characterized in that** the second operation involves heating the screen-printing medium to at most 400°C.

7. Method according to one of Claims 4 to 6, **characterized in that** the carrier used is a substrate which already contains polymer A.

8. Use of a gas diffusion electrode according to one of Claims 1 to 3, produced according to one of Claims 4 to 7, in a fuel cell.

## Revendications

1. Electrode à diffusion gazeuse pour une pile à combustible PEM, comprenant une couche d'électrocatalyseur qui a une teneur en polymère A, pour rendre hydrophobe la couche d'électrocatalyseur, plus petite que 10 % en poids rapportée à la teneur en catalyseur métallique et une épaisseur uniforme de la couche d'électrocatalyseur intérieure ou égale à 20 µm.

2. Electrode à diffusion gazeuse selon la revendication 1, **caractérisée en ce que** la teneur en polymère A, pour rendre hydrophobe la couche d'électrocatalyseur, est comprise entre 0,01 et 1 % en poids.

3. Electrode à diffusion gazeuse selon la revendication, **caractérisée en ce que** la teneur en polymère A de la couche d'électrocatalyseur est de 0,01 % en poids.

4. Procédé de production d'une électrode à diffusion gazeuse selon la revendication 1 ou l'une des revendications 2 ou 3, en utilisant un procédé de sérigraphie, comprenant les stades opératoires suivantes :
- dans un premier stade opératoire du procédé de sérigraphie, on appose sur un support une pâte de sérigraphie, qui comprend au moins un catalyseur métallique ayant une teneur en polymère A allant au maximum jusqu'à 10 % et un milieu de sérigraphie et
- dans un deuxième stade opératoire, on élimine le milieu de sérigraphie par chauffage.

5. Procédé selon la revendication 4, **caractérisé en ce que** l'on utilise comme milieu de sérigraphie un solvant à haut point d'ébullition.

6. Procédé selon la revendication 4 ou la revendication 5, **caractérisé en ce que** dans le deuxième stade opératoire on porte le milieu de sérigraphie au maximum à 400°C.

7. Procédé selon les revendications 4 à 6, **caractérisé en ce que** l'on utilise comme support un substrat qui contient déjà du polymère A.

8. Utilisation d'une électrode à diffusion gazeuse selon l'une des revendications 1 à 3 produite suivant l'une des revendications 4 à 7 dans une pile à combustible.
